# EUROPEAN PATENT SPECIFICATION

(11) **EP 0 776 946 B1**
(45) Date of publication and mention of the grant of the patent: **16.04.2003**
(21) Application number: 96308473.6
(22) Date of filing: 22.11.1996
(51) Int. Cl.: C08L 83/06, C10M 155/02

(54) **Heat resistant polyorganosiloxane compositions**
Hitzebeständige Polyorganosiloxan-Zusammensetzungen
Compositions de polyorganosiloxane résistante à la chaleur

(30) Priority: 29.11.1995 JP 33400695
(43) Date of publication of application: 04.06.1997
(73) Proprietor: Dow Corning Toray Silicone Co., Ltd., Chuo-ku, Tokyo (JP)
(72) Inventor: Akamatsu, Shoji, Ichihara-shi, Chiba Prefecture (JP); Furakawa, Haruhiko, Ichihara-shi, Chiba Prefecture (JP); Watanabe, Toshinori, Ichihara-shi, Chiba Prefecture (JP)
(74) Representative: Kyle, Diana

(56) References cited:
- EP-A- 0 423 724
- EP-A- 0 524 731
- EP-A- 0 667 388

## Description

This invention introduces a heat-resistant agent for organopolysiloxanes and provides a heat-resistant organopolysiloxane composition. Our heat-resistant agent exhibits good solubility in various organopolysiloxanes, including dimethylpolysiloxane, and it imparts superior heat-resistance to these organopolysiloxanes. The heat-resistant organopolysiloxane compositions, which contain our heat-resistant agent, have both superior transparency and heat resistance.

Heat-resistant agents for organopolysiloxanes are known from JP-As 47-3922, 7-42472 and 7-216376.

However, organopolysiloxanes having hindered phenol residues, must contain large organic groups to exhibit good solubility and to confer heat resistance within these organopolysiloxanes. Moreover, they lack solubility, for example, in dimethyl polysiloxane, dimethyl siloxane-methylphenylsiloxane copolymer and dimethylsiloxane-methyl(3,3,3-trifluoropropyl) siloxane copolymer, all of which comprise dimethylsiloxane units. These diorganopolysiloxanes are turbid and lack sufficient heat-resistance. Likewise, organopolysiloxanes having phenol residues cannot confer sufficient heat resistance to organopolysiloxanes.

An object of this invention is to provide a heat-resistant agent for organopolysiloxanes with which various organopolysiloxanes, including dimethylpolysiloxane, exhibit good solubility and which confers superior heat-resistance on these organopolysiloxanes. Another object is to provide a heat-resistant organopolysiloxane composition that contains this heat-resistant agent and that has superior transparency and heat resistance.

The heat-resistant agent for organopolysiloxanes of this invention is represented by the general formulas: 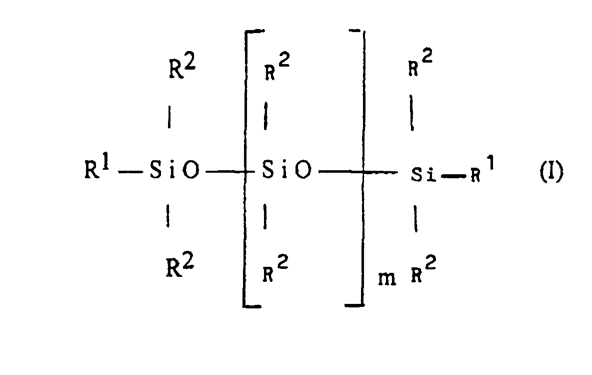 and 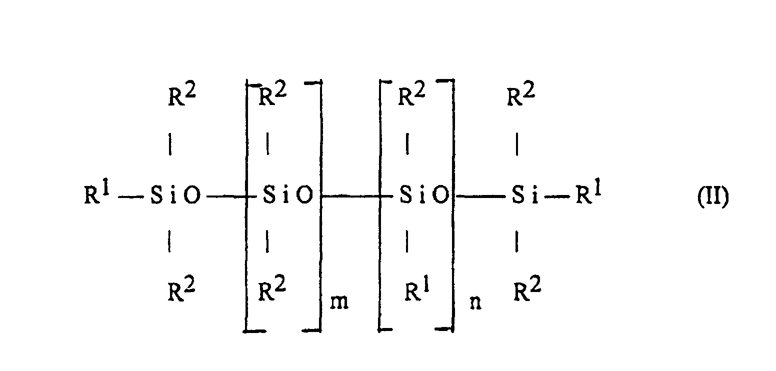 wherein, R¹ is a monovalent hydrocarbon or halogenated hydrocarbon group of 1 to 10 carbon atoms or a eugenol residue of the formula 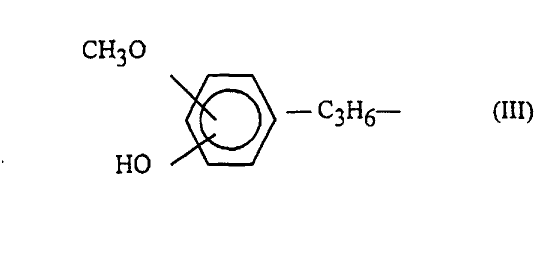 R² is a monovalent hydrocarbon or halogenated hydrocarbon group of 1 to 10 carbon atoms, m is an integer of 5 to 500 and n is an integer of 1 to 500. However, at least one of the R¹ groups bonded to a terminal of the molecular chain is a eugenol residue.

The heat-resistant organopolysiloxane composition of our invention is comprised of (A) an organopolysiloxane (different from the organopolysiloxane indicated by the above general formula) and of (B) the aforementioned heat-resistant agent for organopolysiloxanes.

The monovalent hydrocarbon group of R¹ has 1 to 10 carbon atoms and includes, for example, alkyl groups such as methyl, ethyl or propyl; aryl groups such as phenyl or tolyl; and halogenated alkyl groups such as 3,3,3-trifluoropropyl groups. R² is also a monovalent hydrocarbon or halogenated hydrocarbon group of 1 to 10 carbon atoms and is independently selected from the same monovalent hydrocarbon or halogenated hydrocarbon groups of 1 to 10 carbon atoms as R¹. In the above formula, m is an integer of 5 to 500, and n is an integer of 1 to 500. In formula (II) the ratio n/m is preferably 0.001 to 1. Formula (I) provides that at least one R¹ that is bonded to a
terminal of the molecular chain is a eugenol residue as described in formula (III). The viscosity of the heat-resistant agent for organopolysiloxanes at 25°C is 10 to 100,000 mPa.s (centipoise).

Preferably, our heat-resistant agent for organopolysiloxanes is represented by the general formula 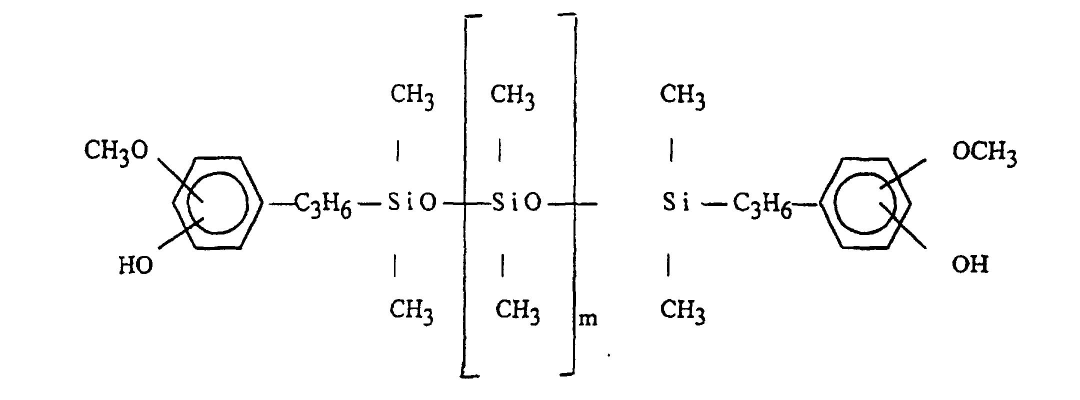 wherein, m is an integer of 5 to 500;
a heat-resistant agent represented by the general formula 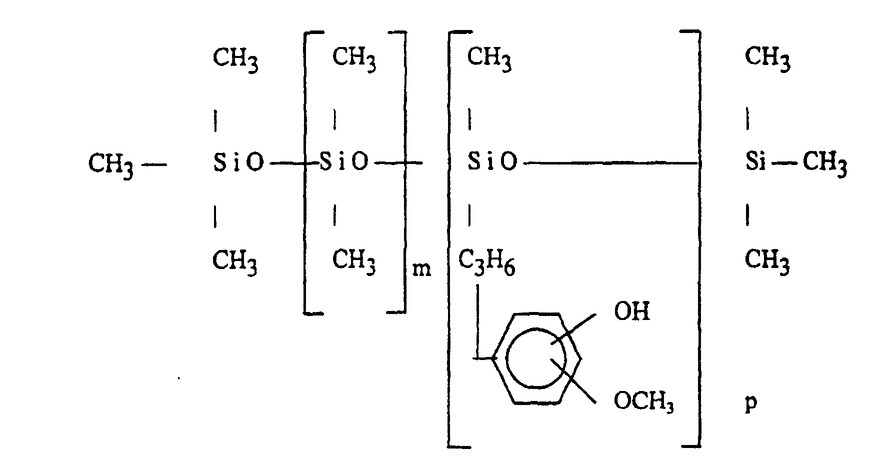 wherein, m is an integer of 5 to 500 and p is an integer of 1 to 500; or a heat-resistant agent of the general formula 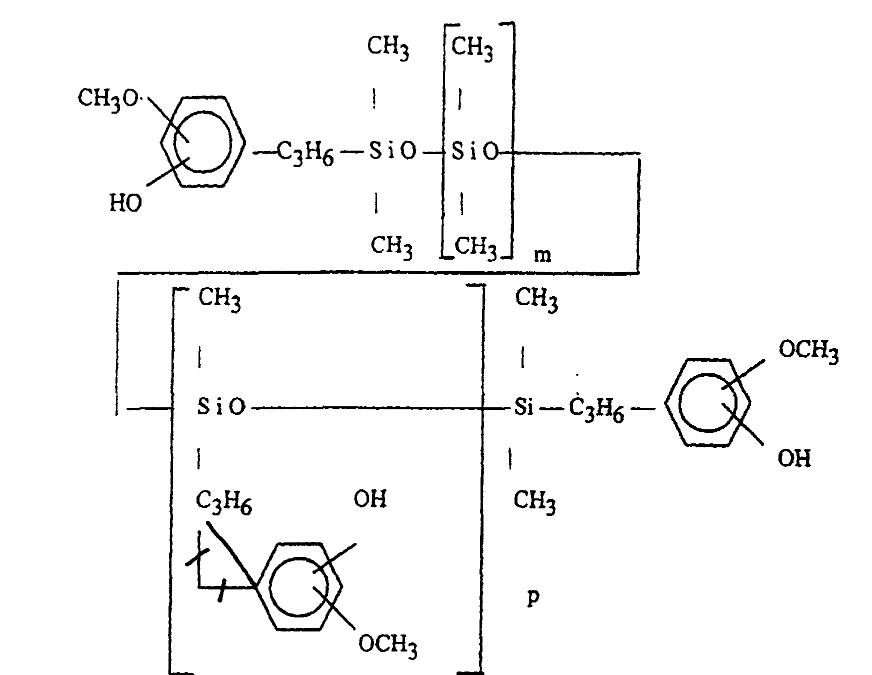 wherein, m is an integer of 5 to 500 and p is an integer of 1 to 500.

There are no particular limitations on the organopolysiloxane (A) of this invention as long as it is not an organopolysiloxane as indicated by general formula (I). Its molecular structure is, for example, straight chain, straight chain having some branches, branch chain or cyclic. The straight chain form is particularly desirable. These organopolysiloxanes can be, for example, dimethylpolysiloxanes, both terminals of the molecular chain of which are blocked by trimethylsiloxy groups; dimethylsiloxane-methylphenylsiloxane copolymer. both terminals of the molecular chain of which are blocked by trimethylsiloxy groups; dimethylsiloxane-diphenylsiloxane copolymer, both terminals of the molecular chain of which are blocked by trimethylsiloxy groups; methylvinyl polysiloxane both terminals of the molecular chain of which are blocked by trimethylsiloxy groups; dimethylsiloxane-methylvinyl siloxane copolymer, both terminals of the molecular chain of which are blocked by trimethylsiloxy groups; dimethylsiloxane-methyl (3,3,3-trifluoropropyl)siloxane copolymer, both terminals of the molecular chain of which are blocked by trimethylsiloxy groups; dimethylpolysiloxane, both terminals of the molecular chain of which are blocked by silanol groups; dimethylsiloxane-methylphenylsiloxane copolymer, both terminals of the molecular chain of which are blocked by silanol groups; and dimethylsiloxane-methylvinylsiloxane copolymer. both terminals of the molecular chain of which are blocked by silanol groups. In our heat-resistant organopolysiloxane composition, dimethylsiloxane units are the principal components of the heat resistant agent for organopolysiloxanes (B). They exhibit superior solubility in such diorganopolysiloxanes (A) as dimethyl polysiloxane, dimethylsiloxane-methylphenylsiloxane copolymer and dimethylsiloxane - methyl (3,3,3-trifluoropropyl) siloxane copolymer. Therefore, when these diorganopolysiloxanes are used as the principal component (A), superior heat resistance is imparted to these diorganopolysiloxanes without loss of transparency.

The viscosity of the organopolysiloxane (A) is 10 to 1,000,000 mPa.s (centipoise).

The content of our heat-resistant agent for organopolysiloxanes (B), in the heat-resistant organopolysiloxane of this invention, is from 0.01 to 20 percent, based on the total weight of (A) and (B).

Optional components may be added to the instant compositions including, for example, known heat resistant agents, inorganic fillers such as fumed silica, wet process silica, sintered silica, fumed titanium dioxide, pulverized quartz, diatomaceous earth, aluminum hydroxide, aluminum oxide, magnesium oxide, aluminosilicic acid, iron oxide, zinc oxide, calcium carbonate, zinc carbonate or mica. and pigments such as carbon black or dyes. These may be compounded with the heat-resistant organopolysiloxane composition of this invention as long as our objectives are not destroyed. The heat-resistant organopolysiloxane compositions of this invention can be used. for example, as fan clutch fluids, viscous coupling oils, lubricants and releasing agents.

We shall now demonstrate our heat-resistant agent for organopolysiloxanes, and our heat-resistant organopolysiloxane compositions by means of examples. The viscosities in the examples are values determined at 25°C.

### Reference Example 1

Six hundred grams of dimethylpolysiloxane, having both molecular chain terminals blocked by dimethylhydrogen siloxy groups (content of silicon atom bonded hydrogen atoms = 0.17 wt %) as indicated by the formula 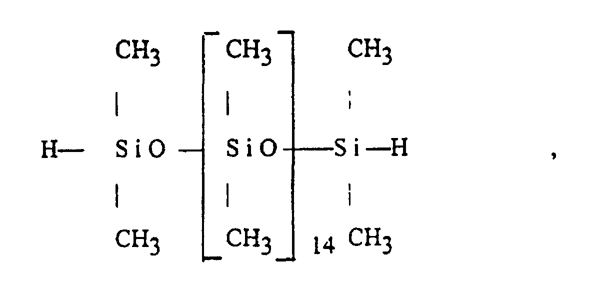 and 0.7 g of isopropyl alcohol solution of 2 wt % monochloroplatinic acid, were introduced into a one liter round-bottom flask equipped with a stirrer, a thermometer and a dropping funnel. The mixture was then heated to 80°C. Next. was generated at this time, caution was taken so the flask contents did not exceed 100°C. After the dropwise addition was completed, the flask was heated and stirred for 30 minutes at 100 to 110°C, after which it was heated to 130°C at 0.67 kPa (5 mm Hg) and the unreacted raw material was removed. The viscosity of the reaction product was 80 mPa.s (centipoise) at 25°C. This reaction product was identified by Fourier transform-nuclear magnetic resonance spectrum analysis (FT-NMR) as dimethylpolysiloxane having eugenol residues in both terminals of the molecular chain as indicated by the following formula.

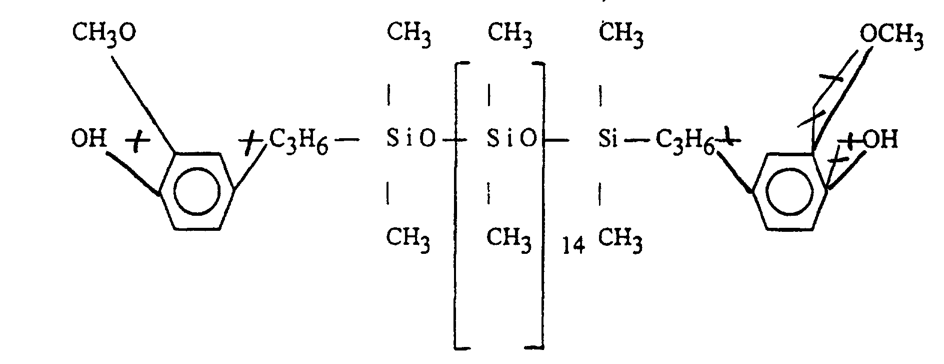

### Reference Example 2

Six hundred grams of dimethylpolysiloxane, having both molecular chain terminals blocked by dimethylhydrogen siloxy groups (content of silicon atom bonded hydrogen atoms = 0.017 wt %) as indicated by the formula 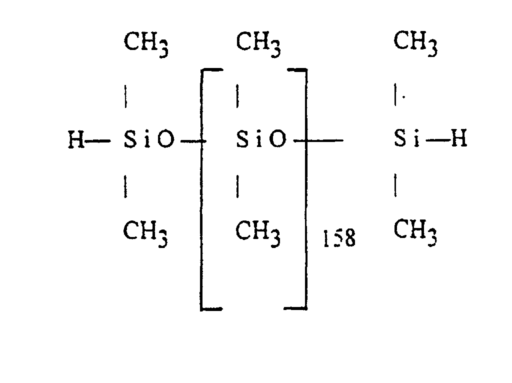 and 0.7 g of isopropyl alcohol solution of 2 wt % monochloroplatinic acid, were introduced into a one liter round-bottom flask equipped with a stirrer, a thermometer and a dropping funnel. The mixture was then heated to 80°C. Next, 18.4 g (0.11 mol) of eugenol were added dropwise to this flask as it was being stirred. Because heat was generated at this time. caution was taken so the flask contents did not exceed 100°C. After the addition was completed, the flask was heated and stirred for 30 minutes at 100 to 110°C, after which it was heated to 130°C at 0.67 kPa (5 mm Hg), and the unreacted raw material was removed. The viscosity of the reaction product was 480 mPa.s (centipoise) at 25°C. This reaction product was identified by FT-NMR as dimethylpolysiloxane having eugenol residues in both terminals of the molecular chain as indicated by the following formula:

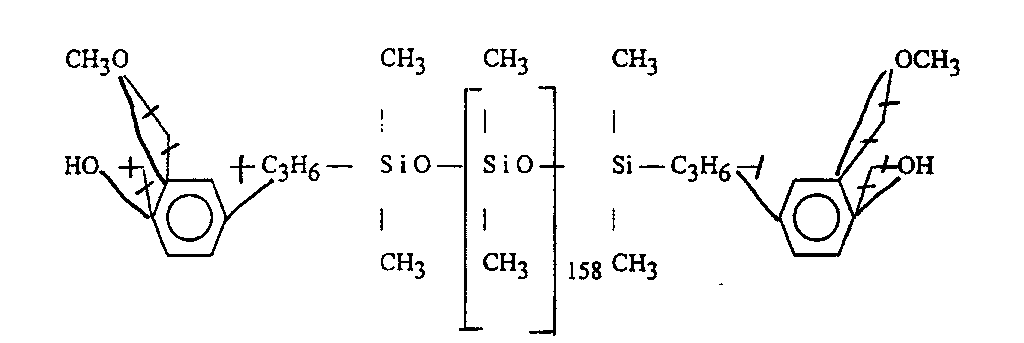

### Reference Example 3

Six hundred grams of dimethylsiloxane-methylhydrogen siloxane copolymer (content of silicon bonded hydrogen atoms = 0.1 wt %) of a viscosity of 170 mPa.s (centipoise) having both molecular chain terminals blocked by trimethylsiloxy groups as indicated by the formula 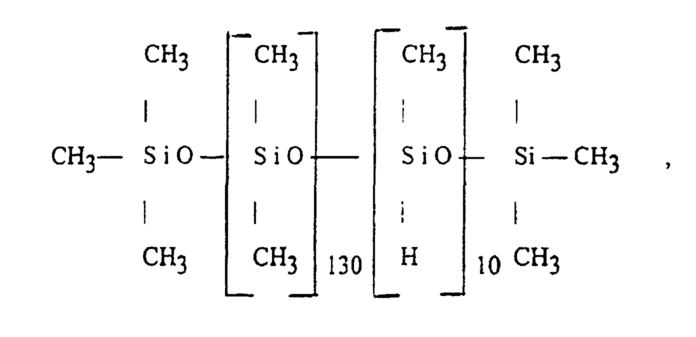 and 0.7 g of isopropyl alcohol solution of 2 wt % monochloroplatinic acid, were introduced into a one liter round-bottom flask equipped with a stirrer, a thermometer and a dropping funnel. The mixture was then heated to 80°C. Next, 108 g (0.66 mol) of eugenol were added dropwise to this flask as it was being stirred. Because heat was generated at this time. caution was taken so the flask contents did not exceed 100°C. After the addition was completed, the flask was heated and stirred for 30 minutes at 100 to 110°C, after which it was heated to 130°C at 0.67kPa (5 mm Hg), and the unreacted raw material was removed. The viscosity of the reaction product was 600 mPa.s (centipoise) at 25°C. This reaction product was identified by FT-NMR as an organopolysiloxane having eugenol residues in both terminals of the molecular chain as indicated by the following formula:

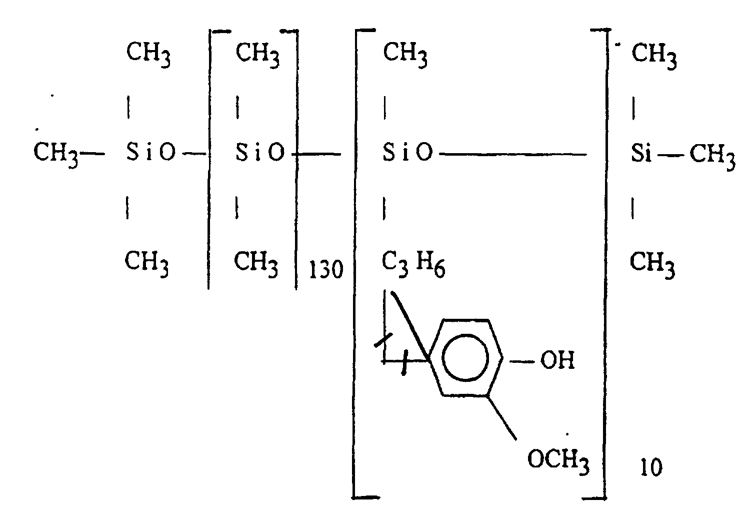

### Reference Example 4

Fifty grams of methylsiloxane-methylhydrogensiloxane copolymer (content of silicon bonded hydrogen atoms = 1.6 wt %), having both molecular chain terminals blocked by trimethylsiloxy groups as indicated by the formula 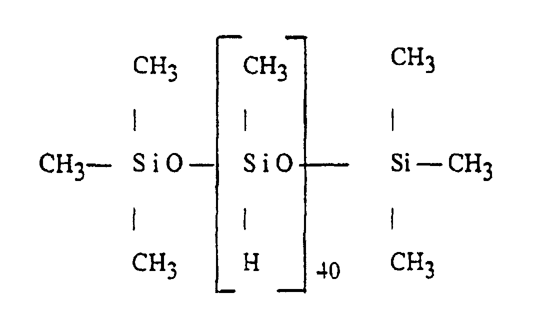 and 0.05 g of isopropyl alcohol solution of 3 wt % monochloroplatinic acid 6-hydrate. were introduced into a one liter round-bottom flask equipped with a stirrer, a thermometer and a dropping funnel. The mixture was then heated to 80°C. Next, 340 g (0.87 mol) of an organic compound indicated by the formula 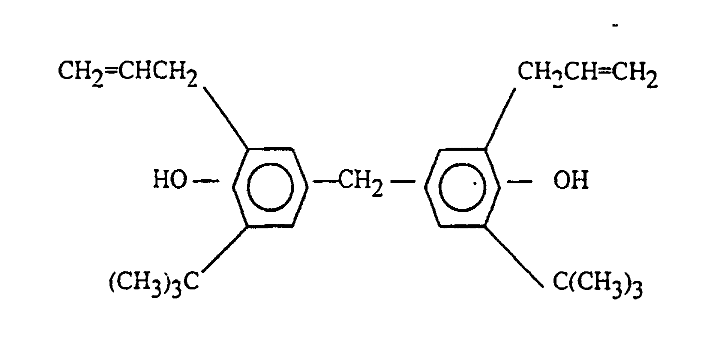 were added dropwise to the flask contents as it was being stirred. The flask was then heated and stirred for 3 hours at 100°C. Next. 50 g (0.45 mol) of 1 octene were added dropwise to this flask and the flask was again heated and stirred for 1 hour at 100°C. Following this, the flask was heated to 130°C at 1.3 kPa (10 mm Hg) and the unreacted raw material was removed. This reaction product was identified by FT-NMR as an organopolysiloxane having hindered phenol residues in both terminals of the molecular chain as indicated by the following formula.

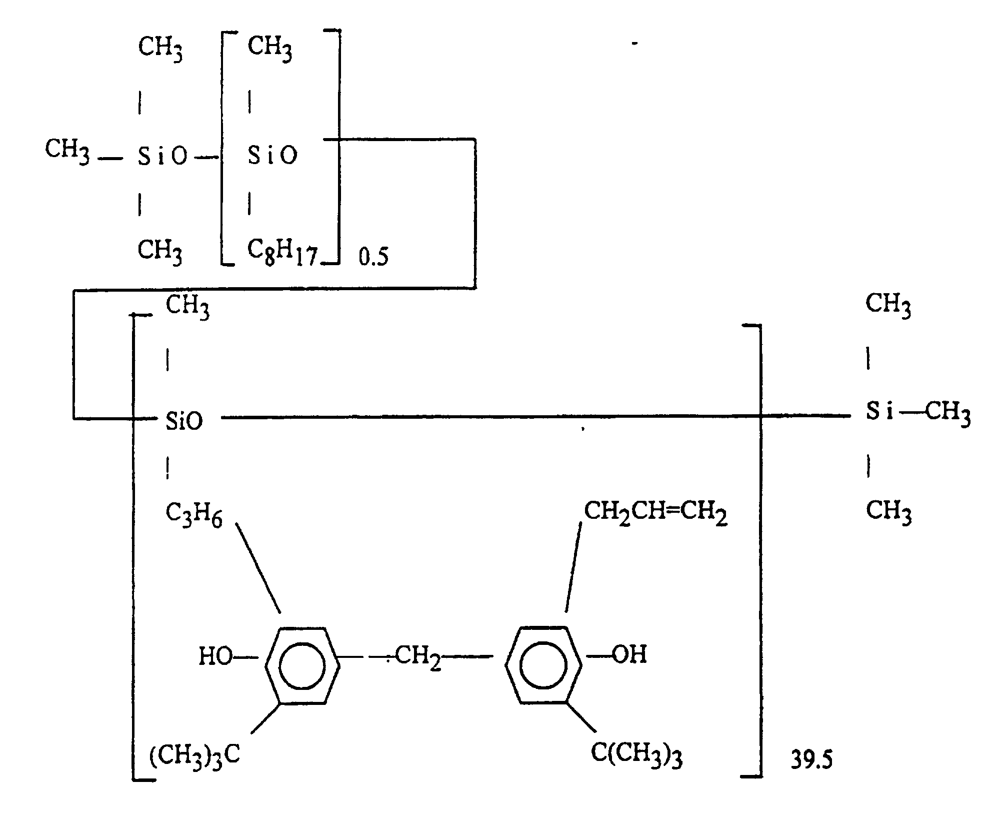

### Reference Example 5

Six Hundred grams of dimethylpolysiloxane having both molecular chain terminals blocked by dimethylhydrodienesiloxy groups, (content of silicon bonded hydrogen atoms = 0.017 wt %) as indicated by the formula 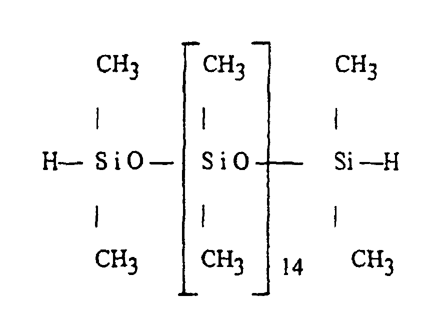 and 0.7 g of isopropyl alcohol solution of 2 wt % monochloroplatinic acid, were introduced into a one liter round-bottom flask equipped with a stirrer, a thermometer and a dropping funnel. The mixture was heated to 80°C. Next, 150 g (1.12 mol) of o-allylphenol were added dropwise to this flask as it was being stirred. Because heat was generated at this time, caution was taken so that the flask contents did not exceed 100°C. After dropwise addition was completed, the flask was heated and stirred for 30 minutes at 100 to 110°C, after which it was heated to 130°C at 0.67 kPa (5 mm Hg) and the unreacted raw material was removed. The viscosity of the reaction product was 80 mPa.s (centipoise) at 25°C. This reaction product was identified by FT-NMR as dimethylpolysiloxane having phenol residues in both terminals of the molecular chain as indicated by the following formula.

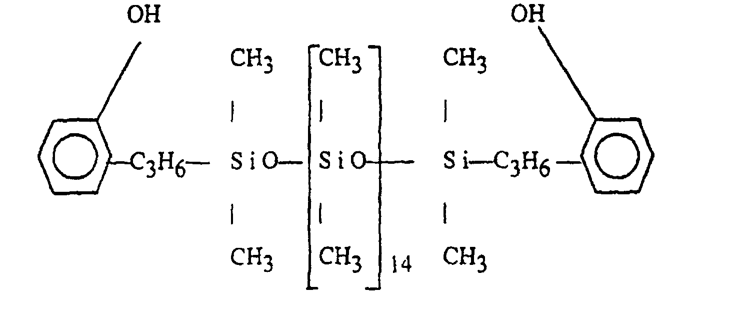

### Example 1

The dimethylpolysiloxane of Reference Example 1 (0.3 part by weight) was added as the heat resistant agent to 100 parts by weight of dimethylpolysiloxane having a viscosity of 10,000 mPa.s (centipoise), having both molecular chain terminals blocked by trimethylsiloxy groups. The organopolysiloxane composition obtained was a homogeneous and transparent liquid. Thirty grams of this composition were introduced into a beaker, the diameter of the bottom face of which was approximately 5 cm, and the beaker was placed in an oven at 280°C. The time required for the viscosity to increase to twice its initial viscosity was defined as gelation time. This organopolysiloxane was subjected to thermogravimetric analysis and the weight decrease ratio was found. The results are shown in Table 1.

### Example 2

Three parts by weight of the dimethylpolysiloxane of Reference Example 2 was added as our heat resistant agent to 100 parts by weight of dimethylpolysiloxane of a viscosity of 10,000 mPa.s (centipoise), having both molecular chain terminals blocked by trimethylsiloxy groups. The organopolysiloxane composition obtained was a homogeneous and transparent liquid. Thirty grams of this organopolysiloxane composition were introduced into a beaker as in Example 1, and the gelation time determined. This organopolysiloxane was also subjected to thermogravimetric analysis and the weight decrease ratio was found. The results are shown in Table 1.

### Example 3

The organopolysiloxane of Reference Example 3 (0.3 parts by weight) was added as our heat resistant agent to 100 parts by weight of dimethylpolysiloxane of a viscosity of 10,000 mPa.s (centipoise), having both molecular chain terminals blocked by trimethylsiloxy groups. The organopolysiloxane composition obtained was a homogeneous and transparent liquid. Thirty grams of this organopolysiloxane composition were introduced into a beaker as in Example 1, and the gelation time was determined. The results are also shown in Table 1.

### Comparative Example 1

The organopolysiloxane prepared in Reference Example 4 (3 parts by weight) was added as a heat resistant agent to 100 parts by weight of dimethylpolysiloxane of a viscosity of 10,000 mPa.s (centipoise), having both molecular chain terminals blocked by trimethylsiloxy groups. The organopolysiloxane composition obtained was an opaque liquid (i.e., suspension.) Thirty grams of this organopolysiloxane composition were introduced into a beaker as in Example 1 and the gelation time was determined. The results are shown in Table 1.

### Comparative Example 2

The dimethylpolysiloxane of Reference Example 5 (0.3 parts by weight) was added as the heat resistant agent to 100 parts by weight of dimethylpolysiloxane of a viscosity of 10,000 mPa.s (centipoise), having both molecular chain terminals blocked by trimethylsiloxy groups. The organopolysiloxane composition obtained was a homogeneous and transparent liquid. Thirty grams of this organopolysiloxane composition were introduced into a beaker as in Example land the gelation time was determined. This organopolysiloxane was subjected to thermogravimetric analysis and the weight decrease ratio was found. The results are shown in Table 1.

### Comparative Example 3

Thirty grams of dimethylpolysiloxane of a viscosity of 10,000 mPa.s (centipoise), having both molecular chain terminals blocked by trimethylsiloxy groups were introduced into a beaker as in Example 1 and the gelation time was determined. This organopolysiloxane was subjected to thermogravimetric analysis and the weight decrease ratio was found. The results are shown in Table 1.

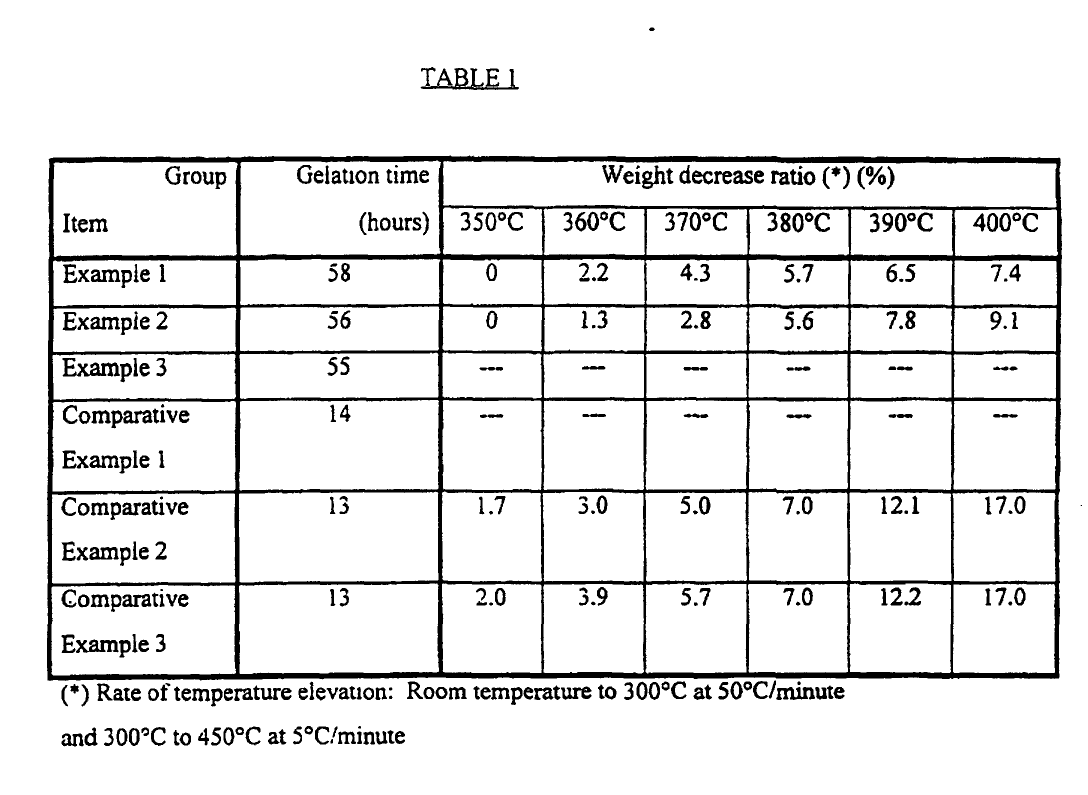

## Claims

1. A heat resistant composition comprising:
(A) an organopolysiloxane and
(B) the eugenol-functional organopolysiloxane having a formula selected from the group consisting of 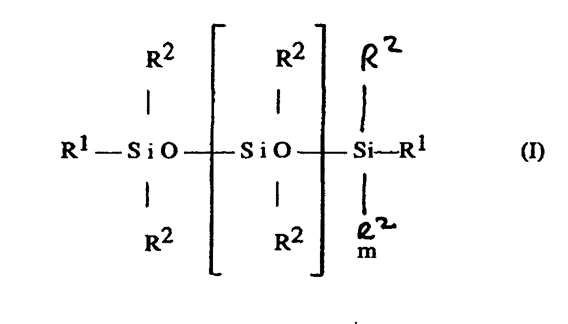 and 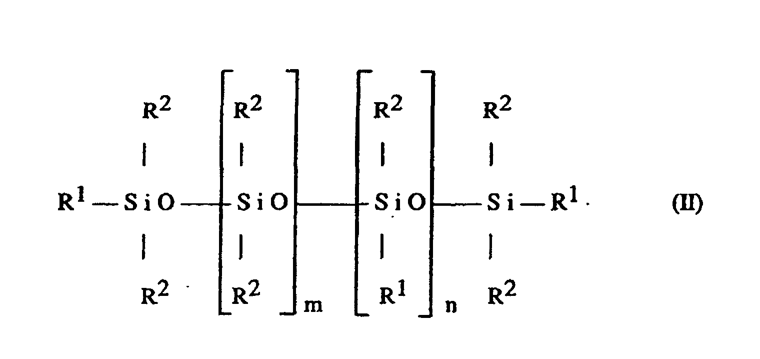
wherein R¹ is a monovalent group independently selected from a hydrocarbon group having 1 to 10 carbon atoms, a halogenated hydrocarbon group having 1 to 10 carbon atoms and a eugenol residue of the formula 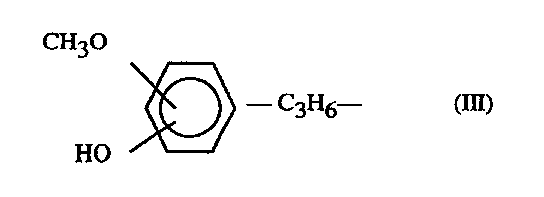 R² is a monovalent group independently selected from a hydrocarbon group having 1 to 10 carbon atoms or a halogenated hydrocarbon group having 1 to 10 carbon atoms, m is an integer of 5 to 500 and n is an integer of 1 to 500, with the proviso that there is at least one eugenol residue in the molecule.

2. The composition according to claim 1, wherein R² is independently selected from the group consisting of methyl, ethyl, propyl, phenyl, tolyl and 3,3,3-trifluoropropyl.

3. The composition in accordance with claim 1 or 2 wherein (B) is organopolysiloxane according to claim 1, wherein each R¹ is said eugenol residue.

4. The composition in accordance with claim 1, 2 or 3 wherein (B) is selected from the group of 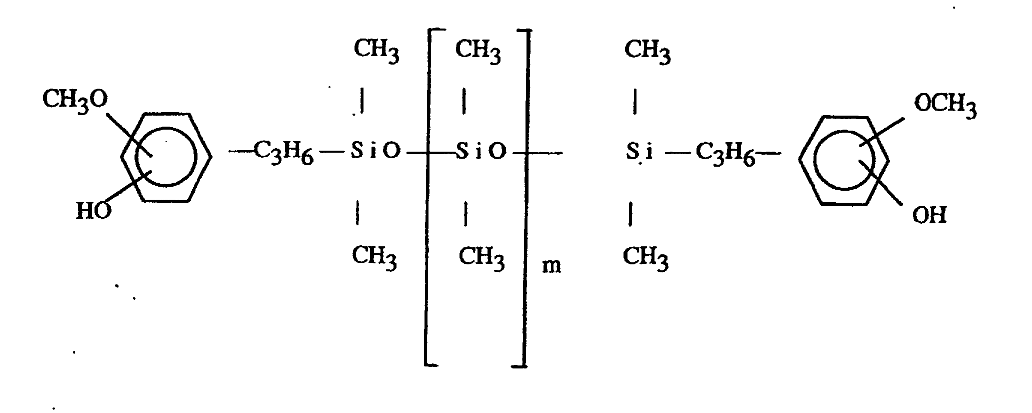 wherein, m is an integer of 5 to 500;
a heat-resistant agent represented by the general formula 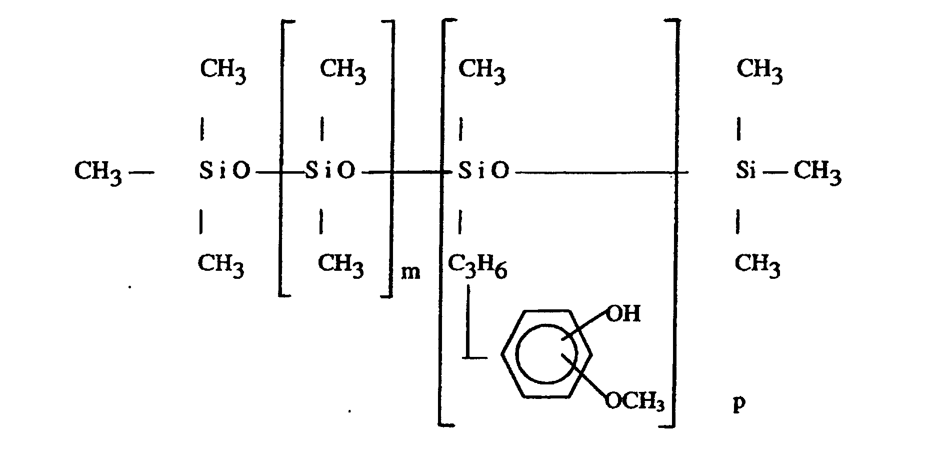 wherein, m is an integer of 5 to 500 and p is an integer of 1 to 500;
or a heat-resistant agent of the general formula 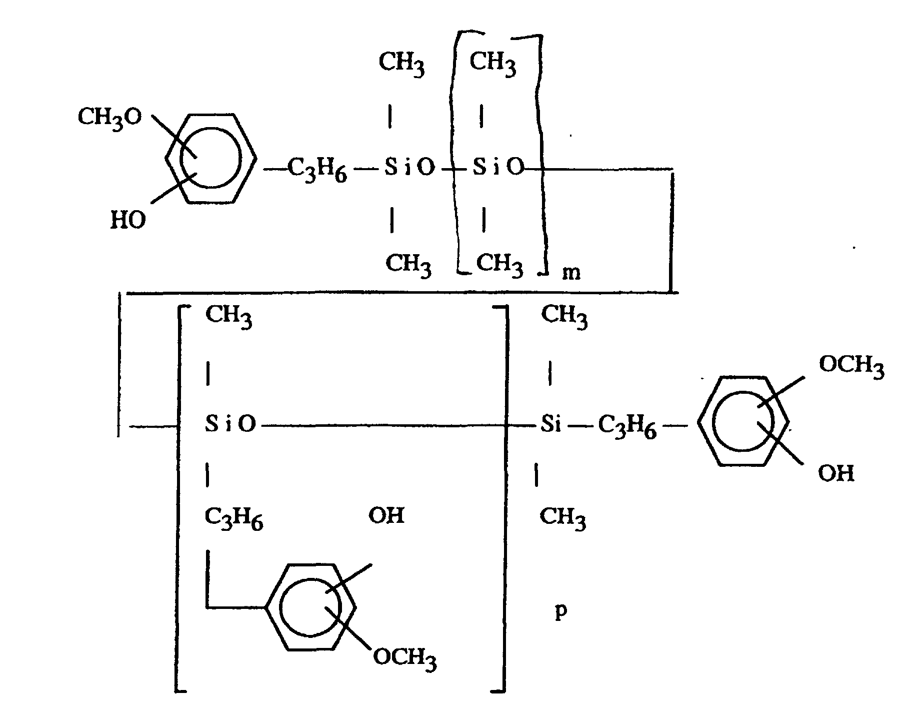 wherein, m is an integer of 5 to 500 and p is an integer of 1 to 500.

5. The composition according to claim any one of claims 1 to 4, wherein said organopolysiloxane (A) is a polydimethylsiloxane, a dimethylsiloxane-methylphenylsiloxane copolymer, having trimethylsiloxy terminal groups; dimethylsiloxane-diphenylsiloxane copolymer having trimethylsiloxy terminal groups; a methylvinyl polysiloxane having trimethylsiloxy terminal groups; a dimethylsiloxane-methylvinyl siloxane copolymer having trimethylsiloxy terminal groups; a dimethylsiloxane-methyl (3,3,3-trifluoropropyl)siloxane copolymer, having trimethylsiloxy terminal groups; ;a dimethylsiloxane-methylphenylsiloxane copolymer having silanol terminal groups; and a dimethylsiloxane-methylvinylsiloxane copolymer, having silanol terminol groups.

6. The composition in accordance with claim 5 wherein the polydimethylsiloxane has trimethylsiloxy terminal groups or silanol terminal groups.

7. Use of a eugenol functional organopolysiloxane in the form (B) in claim 1 as a heat resistant agent.

8. Use of a composition in accordance with any one of claims 1 to 6 as or in fan clutch fluid, a viscous coupling oil, a lubricant or a releasing agent.

9. A eugenol functional organopolysiloxane having the formula 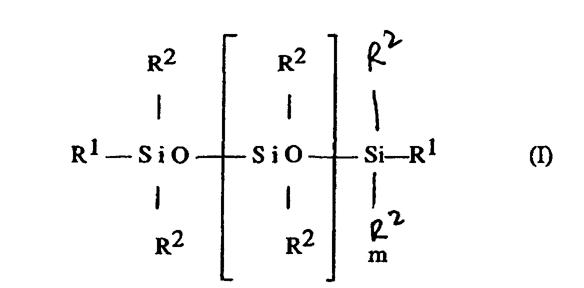 wherein R¹ is a monovalent group independently selected from a hydrocarbon group having 1 to 10 carbon atoms, a halogenated hydrocarbon group having 1 to 10 carbon atoms and a eugenol residue of the formula 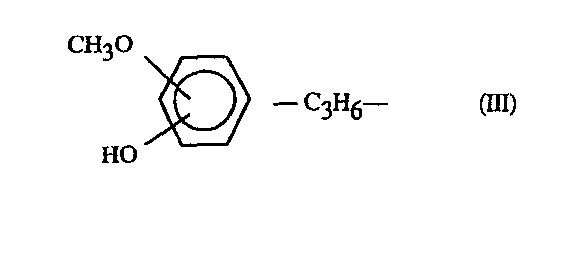 R² is a monovalent group independently selected from a hydrocarbon group having 1 to 10 carbon atoms or a halogenated hydrocarbon group having 1 to 10 carbon atoms, m is an integer of 5 to 500 and n is an integer of 1 to 500, with the proviso that there is one eugenol residue in the molecule.

10. A eugenol functional organopolysiloxane having the formula 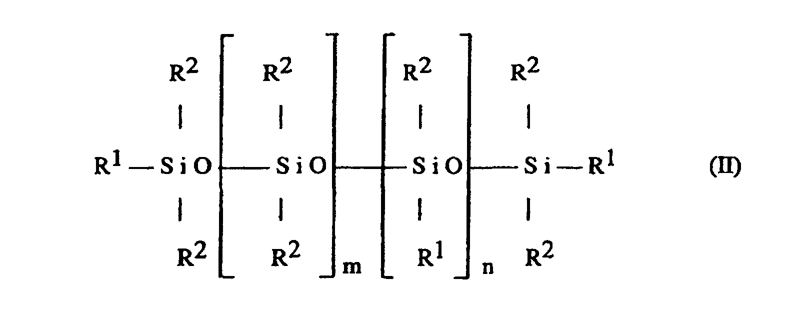 wherein R¹ is a monovalent group independently selected from a hydrocarbon group having 1 to 10 carbon atoms, a halogenated hydrocarbon group having 1 to 10 carbon atoms and a eugenol residue of the formula 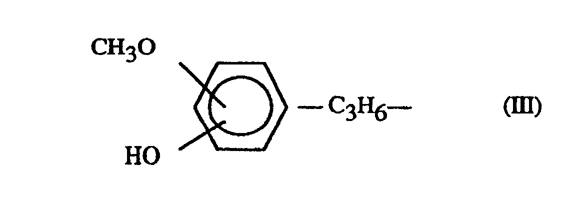 R² is a monovalent group independently selected from a hydrocarbon group having 1 to 10 carbon atoms or a halogenated hydrocarbon group having 1 to 10 carbon atoms, m is an integer of 5 to 500 and n is an integer of 1 to 500, with the proviso that at least one eugenol residue in the molecule is not a terminal group.

## Revendications

1. Composition résistante à la chaleur, comprenant
(A) un organopolysiloxane, et
(B) l'organopolysiloxane à fonction eugénol ayant une formule choisie dans le groupe constitué par 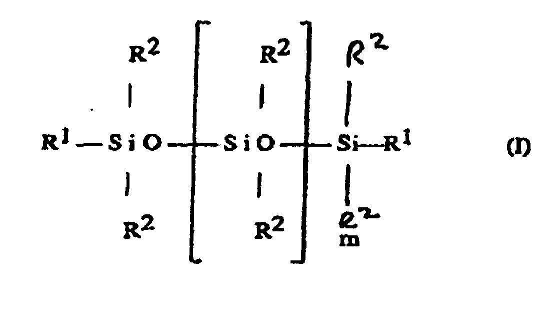 et 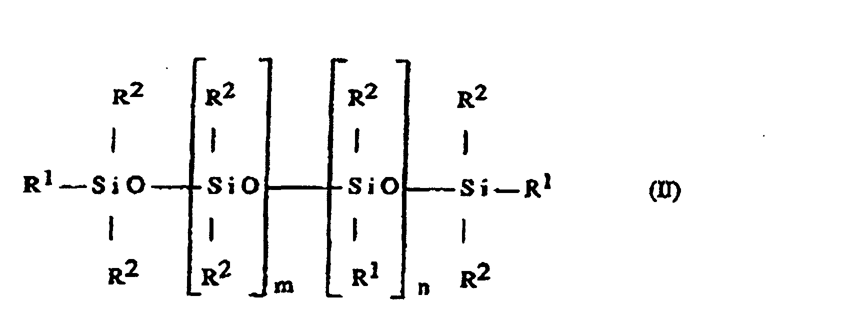
où R¹ est un groupe monovalent choisi indépendamment parmi un groupe hydrocarbure ayant de 1 à 10 atomes de carbone, un groupe hydrocarbure halogéné ayant de 1 à 10 atomes de carbone et un résidu eugénol de formule 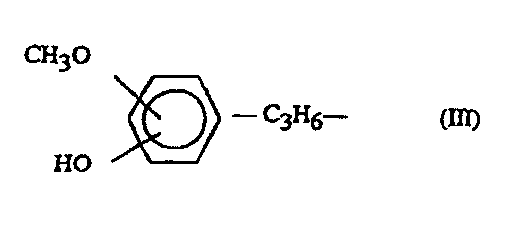 R² est un groupe monovalent choisi indépendamment parmi un groupe hydrocarbure ayant de 1 à 10 atomes de carbone ou un groupe hydrocarbure halogéné ayant de 1 à 10 atomes de carbone, m est un nombre entier de 5 à 500 et n est un nombre entier de 1 à 500, à condition qu'il y ait au moins un résidu eugénol dans la molécule.

2. Composition selon la revendication 1, dans laquelle R² est choisi indépendamment dans le groupe constitué par les radicaux méthyle, éthyle, propyle, phényle, tolyle et 3,3,3-trifluoropropyle.

3. Composition selon la revendication 1 ou 2, dans laquelle (B) est un organopolysiloxane selon la revendication 1, dans laquelle chaque R¹ est ledit résidu eugénol.

4. Composition selon la revendication 1, 2 ou 3, dans laquelle (B) est choisi dans le groupe de 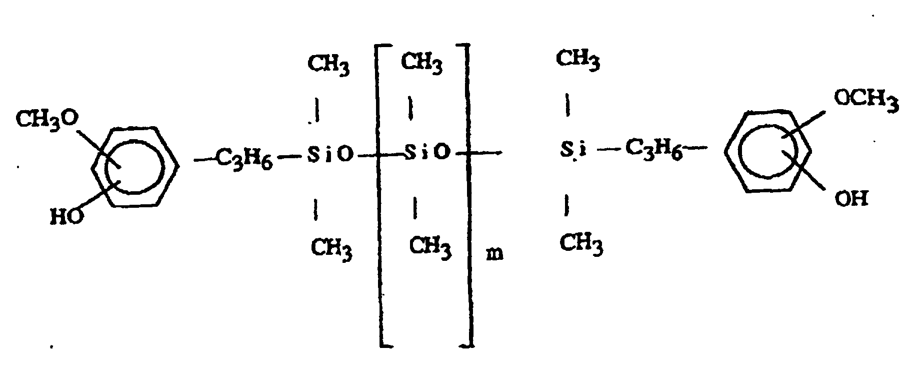 où m est un nombre entier de 5 à 500 ;
un agent résistant à la chaleur représenté par la formule générale 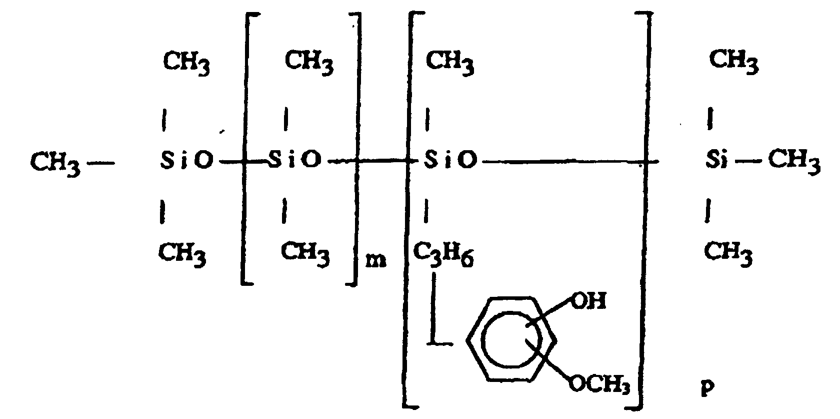 où m est un nombre entier de 5 à 500 et p est un nombre entier de 1 à 500 ;
ou un agent résistant à la chaleur de formule générale 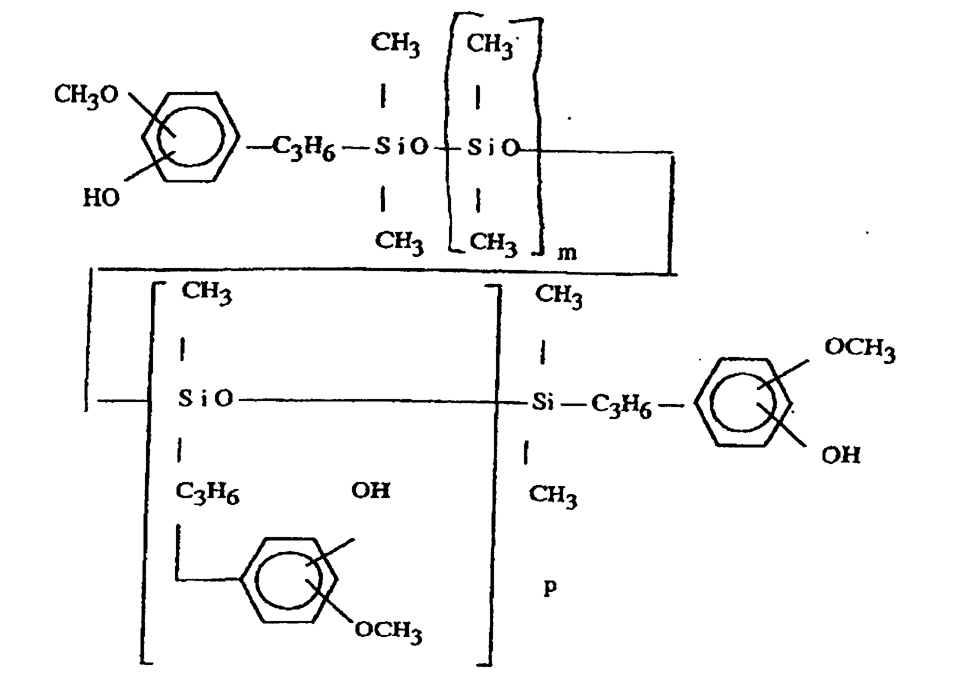 où m est un nombre entier de 5 à 500 et p est un nombre entier de 1 à 500.

5. Composition selon l'une quelconque des revendications 1 à 4, dans laquelle ledit organopolysiloxane (A) est un polydiméthylsiloxane, un copolymère diméthylsiloxane-méthylphénylsiloxane ayant des groupes terminaux triméthylsiloxy ; un copolymère diméthylsiloxane-diphénylsiloxane ayant des groupes terminaux triméthylsiloxy ; un méthylvinylpolysiloxane ayant des groupes terminaux triméthylsiloxy ; un copolymère diméthylsiloxane-méthylvinylsiloxane ayant des groupes terminaux triméthylsiloxy ; un copolymère diméthylsiloxane-méthyl(3,3,3-trifluoropropyl)siloxane ayant des groupes terminaux triméthylsiloxy ; un copolymère diméthylsiloxane-méthylphénylsiloxane ayant des groupes terminaux silanol ; et un copolymère diméthylsiloxane-méthylvinylsiloxane ayant des groupes terminaux silanol.

6. Composition selon la revendication 5, dans laquelle le polydiméthylsiloxane comporte des groupes terminaux triméthylsiloxy ou des groupes terminaux silanol.

7. Utilisation d'un organopolysiloxane à fonction eugénol sous la forme (B) dans la revendication 1 comme agent résistant à la chaleur.

8. Utilisation d'une composition selon l'une quelconque des revendications 1 à 6 comme ou dans un fluide d'embrayage de ventilateur, une huile de couplage visqueuse, un agent lubrifiant ou un agent de démoulage.

9. Organopolysiloxane à fonction eugénol représenté par la formule 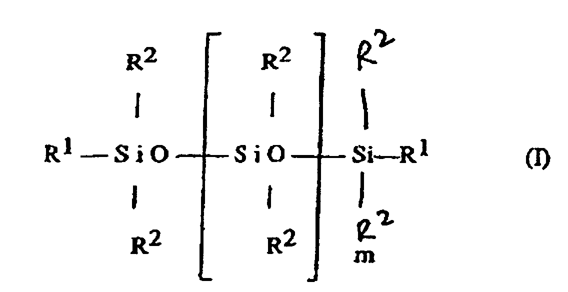 où R¹ est un groupe monovalent choisi indépendamment parmi un groupe hydrocarbure ayant de 1 à 10 atomes de carbone, un groupe hydrocarbure halogéné ayant de 1 à 10 atomes de carbone et un résidu eugénol représenté par la formule 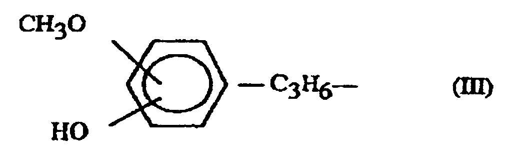 R² est un groupe monovalent choisi indépendamment parmi un groupe hydrocarbure ayant de 1 à 10 atomes de carbone ou un groupe hydrocarbure halogéné ayant de 1 à 10 atomes de carbone, m est un nombre entier de 5 à 500 et n est un nombre entier de 1 à 500, à condition qu'il y ait au moins un résidu eugénol dans la molécule.

10. Organopolysiloxane à fonction eugénol représenté par la formule 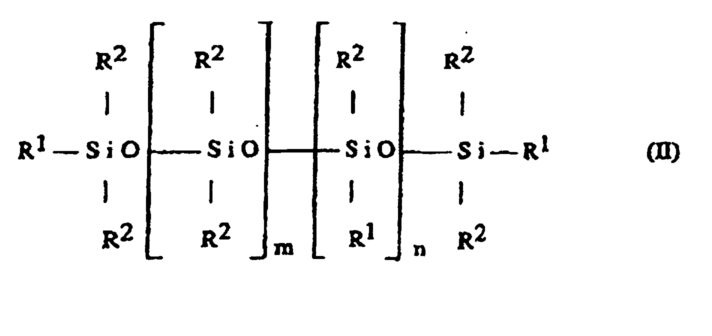 où R¹ est un groupe monovalent choisi indépendamment parmi un groupe hydrocarbure ayant de 1 à 10 atomes de carbone, un groupe hydrocarbure halogéné ayant de 1 à 10 atomes de carbone et un résidu eugénol de formule 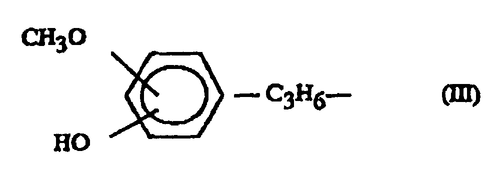 R² est un groupe monovalent choisi indépendamment parmi un groupe hydrocarbure ayant de 1 à 10 atomes de carbone ou un groupe hydrocarbure halogéné ayant de 1 à 10 atomes de carbone, m est un nombre entier de 5 à 500 et n est un nombre entier de 1 à 500, à condition qu'au moins un résidu eugénol dans la molécule ne soit pas un groupe terminal.

## Patentansprüche

1. Hitzebeständige Zusammensetzung, enthaltend:
(A) ein Organopolysiloxan und
(B) ein eugenolfunktionelles Organopolysiloxan mit einer Formel, ausgewählt aus der Gruppe bestehend aus 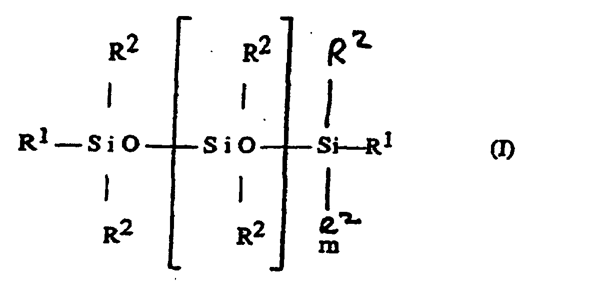 und 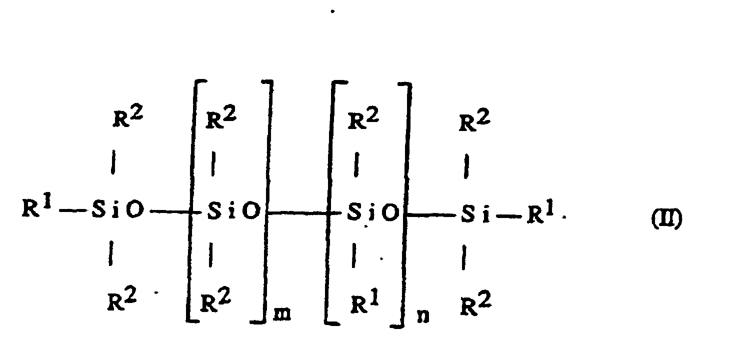
worin R¹ eine monovalente Gruppe ist, die unabhängig voneinander aus einer Kohlenwasserstoffgruppe mit 1-10 Kohlenstoffatomen, einer halogenierten Kohlenwasserstoffgruppe mit 1-10 Kohlenstoffatomen und einem Eugenolrest der Formel 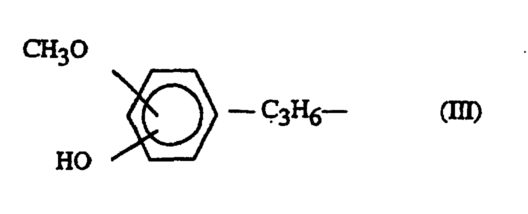 ausgewählt ist,
R² eine monovalente Gruppe ist, die unabhängig voneinander aus einer Kohlenwasserstoffgruppe mit 1-10 Kohlenstoffatomen oder einer halogenierten Kohlenwasserstoffgruppe mit 1-10 Kohlenstoffatomen ausgewählt ist,
m eine ganze Zahl von 5-500 ist und
n eine ganze Zahl von 1-500 ist,
unter der Voraussetzung, dass mindestens ein Eugenolrest im Molekül vorhanden ist.

2. Zusammensetzung nach Anspruch 1, worin R² unabhängig voneinander ausgewählt ist aus der Gruppe bestehend aus Methyl, Ethyl, Propyl, Phenyl, Tolyl und 3,3,3-Trifluorpropyl.

3. Zusammensetzung nach Anspruch 1 oder 2, worin (B) ein Organopolysiloxan gemäß Anspruch 1 ist, in dem jedes R¹ dieser Eugenolrest ist.

4. Zusammensetzung nach Anspruch 1, 2 oder 3, worin (B) ausgewählt ist aus der Gruppe aus 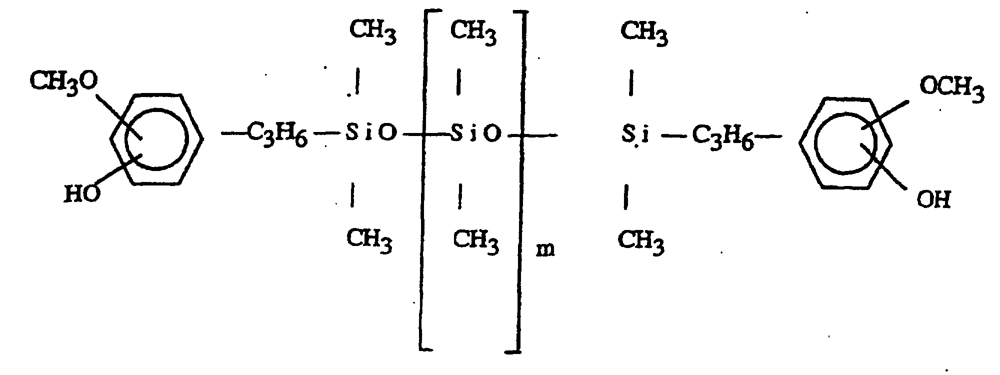 worin m eine ganze Zahl von 5-500 ist,
einem Mittel zur Verbesserung der Wärmebeständigkeit, dargestellt durch die allgemeine Formel 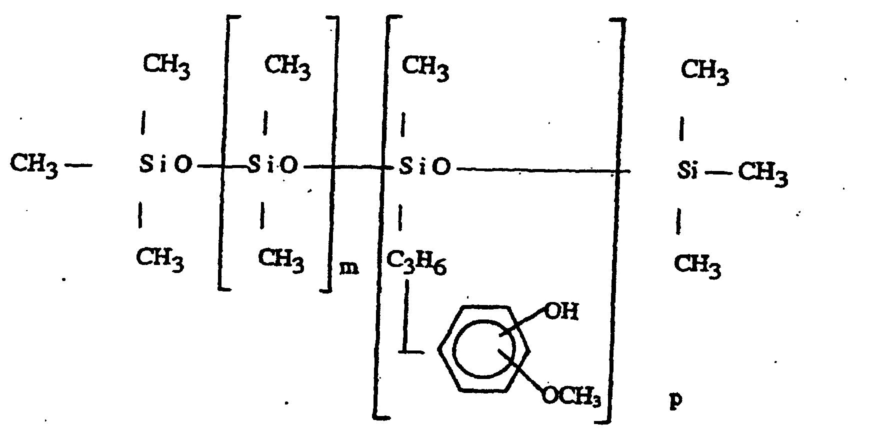 worin m eine ganze Zahl von 5-500 und p eine ganze Zahl von 1-500 ist
oder einem Mittel zur Verbesserung der Wärmebeständigkeit der allgemeinen Formel 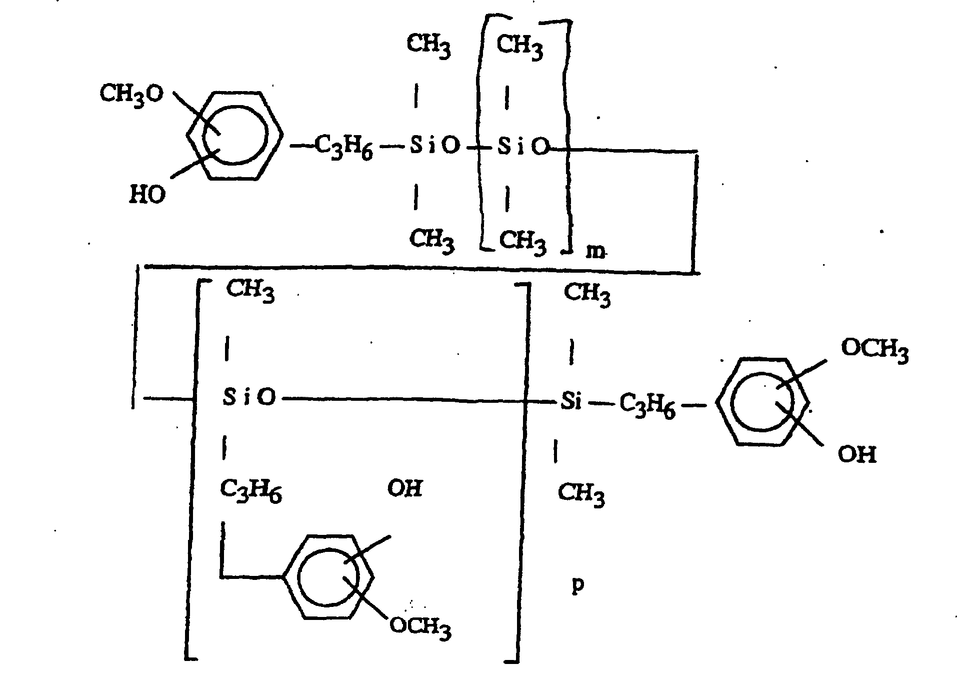 worin m eine ganze Zahl von 5-500 und p eine ganze Zahl von 1-500 ist.

5. Zusammensetzung nach einem der Ansprüche 1-4, worin dieses Organopolysiloxan (A) ein Polydimethylsiloxan, ein Dimethylsiloxan-Methylphenylsiloxan-Copolymer mit Trimethylsiloxyendgruppen, ein Dimethylsiloxan-Diphenylsiloxan-Copolymer mit Trimethylsiloxyendgruppen, ein Methylvinylpolysiloxan mit Trimethylsiloxyendgruppen, ein Dimethylsiloxan-Methylvinylsiloxan-Copolymer mit Trimethylsiloxyendgruppen, ein Dimethylsiloxan-Methyl(3,3,3-trifluorpropyl)siloxan-Copolymer mit Trimethylsiloxyendgruppen, ein Dimethylsiloxan-Methylphenylsiloxan-Copolymer mit Silanolendgruppen oder ein Dimethylsiloxan-Methylvinylsiloxan-Copolymer mit Silanolendgruppen ist.

6. Zusammensetzung nach Anspruch 5, worin das Polydimethylsiloxan Trimethylsiloxyendgruppen oder Silanolendgruppen aufweist.

7. Verwendung eines eugenolfunktionellen Organopolysiloxans in der Form (B) in Anspruch 1 als Mittel zur Verbesserung der Wärmebeständigkeit.

8. Verwendung einer Zusammensetzung nach einem der Ansprüche 1-6 als Lüfterkupplungsflüssigkeit oder in einer solchen, als viskoses Kupplungsöl oder in einem solchen, als Gleitmittel oder in einem solchen oder als Trennmittel oder in einem solchen.

9. Eugenolfunktionelles Organopolysiloxan mit der Formel 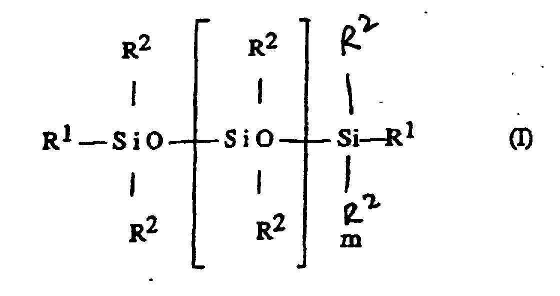 worin R¹ eine monovalente Gruppe ist, die unabhängig voneinander aus einer Kohlenwasserstoffgruppe mit 1-10 Kohlenstoffatomen, einer halogenierten Kohlenwasserstoffgruppe mit 1-10 Kohlenstoffatomen und einem Eugenolrest der Formel 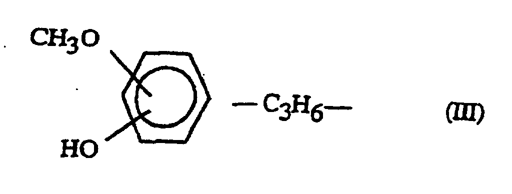 ausgewählt ist,
R² eine monovalente Gruppe ist, die unabhängig voneinander aus einer Kohlenwasserstoffgruppe mit 1-10 Kohlenstoffatomen oder einer halogenierten Kohlenwasserstoffgruppe mit 1-10 Kohlenstoffatomen ausgewählt ist,
m eine ganze Zahl von 5-500 ist und
n eine ganze Zahl von 1-500 ist,
unter der Voraussetzung, dass mindestens ein Eugenolrest im Molekül vorhanden ist.

10. Eugenolfunktionelles Organopolysiloxan mit der Formel 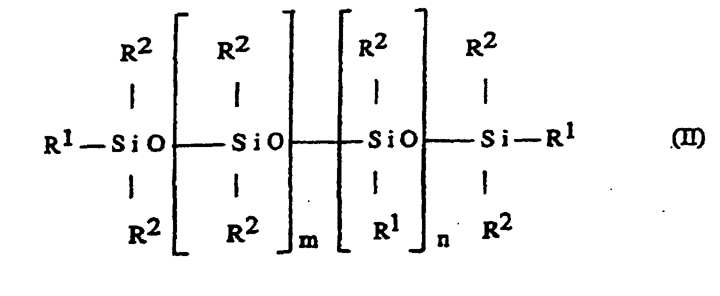 worin R¹ eine monovalente Gruppe ist, die unabhängig voneinander aus einer Kohlenwasserstoffgruppe mit 1-10 Kohlenstoffatomen, einer halogenierten Kohlenwasserstoffgruppe mit 1-10 Kohlenstoffatomen und einem Eugenolrest der Formel 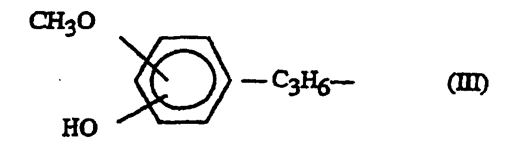 ausgewählt ist,
R² eine monovalente Gruppe ist, die unabhängig voneinander aus einer Kohlenwasserstoffgruppe mit 1-10 Kohlenstoffatomen oder einer halogenierten Kohlenwasserstoffgruppe mit 1-10 Kohlenstoffatomen ausgewählt ist,
m eine ganze Zahl von 5-500 ist und
n eine ganze Zahl von 1-500 ist,
unter der Voraussetzung, dass mindestens ein Eugenolrest im Molekül keine Endgruppe ist.
